(19) Europäisches Patentamt
European Patent Office
Office européen des brevets

(11) **EP 3 323 026 B1**

(12) **EUROPÄISCHE PATENTSCHRIFT**

(45) Veröffentlichungstag und Bekanntmachung des Hinweises auf die Patenterteilung:
**14.06.2023   Patentblatt 2023/24**

(21) Anmeldenummer: **16744302.7**

(22) Anmeldetag: **11.07.2016**

(51) Internationale Patentklassifikation (IPC):
**G05B 19/423** (2006.01)      **B25J 9/18** (2006.01)
**B25J 9/22** (2006.01)      **B25J 9/16** (2006.01)

(52) Gemeinsame Patentklassifikation (CPC):
**B25J 9/1656; G05B 19/423;** G05B 2219/36418;
G05B 2219/36429; G05B 2219/36432;
G05B 2219/39439; G05B 2219/40367

(86) Internationale Anmeldenummer:
**PCT/EP2016/001187**

(87) Internationale Veröffentlichungsnummer:
**WO 2017/008898 (19.01.2017 Gazette 2017/03)**

(54) **ERMITTELN EINES EINGABEBEFEHLS FÜR EINEN ROBOTER, DER DURCH MANUELLES AUSÜBEN EINER KRAFT AUF DEN ROBOTER EINGEGEBEN WIRD**

ASCERTAINING AN INPUT COMMAND FOR A ROBOT, SAID INPUT COMMAND BEING ENTERED BY MANUALLY EXERTING A FORCE ONTO THE ROBOT

DÉTERMINATION D'UNE INSTRUCTION D'ENTRÉE POUR UN ROBOT, QUI EST ENTRÉE EN EXERÇANT MANUELLEMENT UNE FORCE SUR LE ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2015   DE 102015009151**

(43) Veröffentlichungstag der Anmeldung:
**23.05.2018   Patentblatt 2018/21**

(73) Patentinhaber: **KUKA Deutschland GmbH**
**86165 Augsburg (DE)**

(72) Erfinder:
• **MEISSNER, Christian**
**04275 Leipzig (DE)**
• **MÖNNICH, Holger**
**86316 Friedberg (DE)**
• **REICHL, Tobias**
**80939 München (DE)**
• **OSAMA, Shahin**
**86153 Augsburg (DE)**

(74) Vertreter: **Wallinger Ricker Schlotter Tostmann Patent- und Rechtsanwälte mbB**
**Zweibrückenstraße 5-7**
**80331 München (DE)**

(56) Entgegenhaltungen:
**EP-A1- 2 131 257          EP-A1- 2 868 445**
**DE-A1-102013 218 823     US-A1- 2005 222 714**
**US-A1- 2011 190 932**

• **SICILIANO B ET AL: "A general framework for managing multiple tasks in highly redundant robotic systems", ADVANCED ROBOTICS, 1991. 'ROBOTS IN UNSTRUCTURED ENVIRONMENTS', 91 ICA R., FIFTH INTERNATIONAL CONFERENCE ON PISA, ITALY 19-22 JUNE 1991, IEEE, NEW YORK, NY, USA, 19 June 1991 (1991-06-19), page 1211, XP032159906, DOI: 10.1109/ICAR.1991.240390 ISBN: 978-0-7803-0078-1**
• **NAKAMURA Y ET AL: "TASK-PRIORITY BASED REDUNDANCY CONTROL OF ROBOT MANIPULATORS", INTERNATIONAL JOURNAL OF ROBOTICS RESEARCH, SAGE SCIENCE PRESS, THOUSAND OAKS, US, vol. 6, no. 2, 21 June 1987 (1987-06-21), pages 3-15, XP009021870, ISSN: 0278-3649**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **SANDERUD AUDUN RONNING ET AL: "An approach to path planning and real-time redundancy control for human-robot collaboration", 2014 IEEE/ASME INTERNATIONAL CONFERENCE ON ADVANCED INTELLIGENT MECHATRONICS, IEEE, 8 July 2014 (2014-07-08), pages 1018-1023, XP032628533, DOI: 10.1109/AIM.2014.6878214**
- **G?nter Schreiber ET AL: "An intuitive interface for nullspace teaching of redundant robots", 7th, International symposium on advances in robot kinematics;, 31 December 2000 (2000-12-31), pages 209-216, XP055084637, DOI: 10.1007/978-94-011-4120-8_22 ISBN: 978-0-79-236426-9 Retrieved from the Internet: URL:http://www.morpha.de/morpha_page/downl oad/publications/DLR_RRCintuitive.pdf [retrieved on 2013-10-21]**
- **ARNE NORDMANN ET AL: "Teaching nullspace constraints in physical human-robot interaction using Reservoir Computing", ROBOTICS AND AUTOMATION (ICRA), 2012 IEEE INTERNATIONAL CONFERENCE ON, IEEE, 14 May 2012 (2012-05-14), pages 1868-1875, XP032450901, DOI: 10.1109/ICRA.2012.6225170 ISBN: 978-1-4673-1403-9**

**Beschreibung**

Die vorliegende Erfindung betrifft ein Verfahren zum automatisierten Ermitteln eines Eingabebefehls für einen Roboter, der durch manuelles Ausüben einer externen Kraft auf den Roboter eingegeben wird, ein Verfahren zum manuell geführten Bewegen des Roboters, wobei ein so ermittelter Bewegungsbefehl ausgeführt wird, eine Robotersteuerung und ein Computerprogrammprodukt zur Durchführung eines der Verfahren sowie eine Roboteranordnung mit der Robotersteuerung.

Aus der DE 10 2013 218 823 A1 ist ein Verfahren zum manuell geführten Verstellen der Pose bzw. Bewegen eines Industrieroboters bekannt, bei dem eine von einem Bediener auf den Roboter aufgebrachte Führungskraft erfasst und die Antriebe des Roboters kraftgeregelt derart angesteuert werden, dass ein Verstellen einer roboterfesten Referenz nur in derjenigen Freiheit eines Referenz-Koordinatensystems erfolgt, in deren Richtung die Führungskraft ihre größte Kraftrichtungskomponente aufweist.

Hierdurch kann beispielsweise durch entsprechend starkes vertikales Ziehen nach unten und anschließendes horizontales Schieben mehr in eine von zwei Koordinatenachsenrichtungen des Referenz-Koordinatensystems der TCP exakt in Richtung zunächst der vertikalen X-Achse und anschließend exakt in Richtung der horizontalen Y- oder Z-Achse handgeführt bewegt werden.

Die WO 2014/043702 A1 schlägt eine nachgiebige Regelung vor, in der Federkräfte einer virtuellen Fesselung an eine kanonische Pose in den Nullraum des kinematisch redundanten Roboters projiziert werden.

Die Druckschrift EP 2 131 257 A1 offenbart ein Verfahren zum Steuern eines Manipulators mit den Schritten: a) Ermitteln einer Soll-Bewegungsrichtung auf Basis einer auf den Manipulator ausgeübten Kraft; und b) Bewegen des Manipulators in der ermittelten Soll-Bewegungsrichtung um eine vorbestimmte Strecke.

Die Druckschrift DE 10 2013 218823 A1 offenbart ein Verfahren zum manuell geführten Verstellen der Pose eines Manipulatorarms eines Industrieroboters, mit den Schritten: a) Erfassen einer von einem Bediener des Industrieroboters auf den Manipulatorarm aufgebrachten Führungskraft, b) Bestimmen derjenigen Freiheit eines Referenz-Koordinatensystems in deren Richtung die Führungskraft ihre größte Kraftrichtungskomponente aufweist, als eine ausgewählte Freiheit, c) kraftgeregeltes Ansteuern der Antriebe des Industrieroboters derart, dass ein Verstellen eines vorbestimmten, mit dem Manipulatorarm verbundenen Bezugspunktes durch Bewegen des Manipulatorarms während eines manuell geführten Verstellens der Pose des Manipulatorarms nur in der ausgewählten Freiheit erfolgt.

Die Druckschrift US 2011/190932 A1 offenbart eine Steuervorrichtung für einen Roboterarm, mit einer Operationsdatenbank zum Aufzeichnen von Informationen bezüglich eines Betriebs des Roboterarms, eine Korrekturoperationstyp-Bestimmungseinheit, die einen Korrekturtyp für den Betrieb bestimmt, eine Krafterfassungseinheit, die eine Kraft einer Person erfasst, und eine Operationskorrektureinheit, die eine Operation in Übereinstimmung mit der Kraft der Person und dem Korrekturtyp korrigiert, während der Roboterarm eine Aufgabe ausführt.

Aufgabe der vorliegenden Erfindung ist es, eine Befehlseingabe für einen Roboter durch manuelles Ausüben einer externen Kraft auf den Roboter, insbesondere ein manuell geführtes Bewegen des Roboters, zu verbessern.

Diese Aufgabe wird durch ein Verfahren mit den Merkmalen des Anspruchs 1 bzw. 9 gelöst. Ansprüche 10-12 stellen eine Robotersteuerung zur Durchführung eines hier beschriebenen Verfahrens, eine Roboteranordnung mit der Robotersteuerung bzw. ein Computerprogrammprodukt zur Durchführung eines hier beschriebenen Verfahrens unter Schutz. Die Unteransprüche betreffen vorteilhafte Weiterbildungen. Nach einem Aspekt der vorliegenden Erfindung wird ein Eingabebefehl für einen Roboter, der durch manuelles Ausüben einer externen Kraft auf den Roboter eingegeben wird, automatisiert auf Basis desjenigen Anteils von bzw. an durch die externe Kraft aufgeprägten Gelenkkräften ermittelt, der bzw. welcher eine Bewegung des Roboters nur in einem für diesen Eingabebefehl spezifischen Unterraum des Gelenkkoordinatenraums des Roboters zu bewirken sucht bzw. bewirkt, bzw. wird ein Eingabebefehl für einen Roboter, der durch manuelles Ausüben einer externen Kraft auf den Roboter eingegeben wird, automatisiert auf Basis eines bzw. des eine Bewegung des Roboters nur in einem für diesen Eingabebefehl spezifischen Unterraum des Gelenkkoordinatenraums des Roboters zu bewirken suchenden bzw. bewirkenden Anteils von bzw. an durch die externe Kraft aufgeprägten Gelenkkräften ermittelt.

Durch die Ermittlung auf Basis der Gelenkkräfte bzw. ihres Anteils können in einer Ausführung der vorliegenden Erfindung vorteilhaft dieselben physikalischen Dimensionen zugrunde gelegt werden, während beispielsweise in der eingangs genannten DE 10 2013 218 823 A1 aufgrund der Projektion in den Arbeitsraum [N] und [Nm] verglichen und hierzu geeignet gewichtet werden müssen.

Zusätzlich oder alternativ kann die Ermittlung auf Basis der Gelenkkräfte bzw. ihres Anteils in einer Ausführung präziser und/oder zuverlässiger erfolgen als im Arbeitsraum, insbesondere in der Nähe singulärer Posen aufgrund der dortigen Sensitivität in der Jacobimatrix.

Zusätzlich oder alternativ kann die Ermittlung auf Basis der Gelenkkräfte bzw. ihres Anteils in einer Ausführung bei Redundanzen, insbesondere kinematisch redundanten Robotern mit wenigstens sieben Gelenken und/oder Arbeitsräumen mit weniger als sechs Dimensionen vorteilhaft sein. Durch die Projektion in den Arbeitsraum in der eingangs genannten DE 10 2013 218 823 A1 ergibt sich eine Informationsreduktion.

Erfindungsgemäß kann eine bewusste Bewegung des Roboters durch manuelle Führung im kinematischen Nullraum aufgrund der Ermittlung auf Basis der Gelenkkräfte bzw. ihres Anteils vorteilhaft erkannt und somit insbesondere das Risiko einer fehlerhaften Interpretation der manuellen Führung reduziert werden.

Der Roboter weist in einer Ausführung wenigstens drei, insbesondere wenigstens sechs, insbesondere wenigstens sieben Gelenke, insbesondere aktuierbare bzw. aktuierte Gelenke, insbesondere durch je wenigstens einen Elektroantrieb, insbesondere -motor, aktuierbare bzw. aktuierte Gelenke, insbesondere Drehgelenke, sowie Glieder auf, die jeweils durch eines der Gelenke miteinander verbunden sind, insbesondere eine Basis, ein Karussell, eine Schwinge, einen Arm, eine Hand, einen (Werkzeug)Flansch und/oder einen Endeffektor. Durch einen Roboter mit wenigstens sieben Gelenken bzw. (Bewegungs)Achsen können vorteilhaft dieselbe dreidimensionale Lage und Orientierung eines Endglieds mit unterschiedlichen Posen bzw. Gelenkstellungen dargestellt und so vorteilhafte, beispielsweise kollisionsfreie, Posen ausgewählt werden.

In einer Ausführung ist bzw. wird der Roboter zum Ermitteln eines Eingabebefehls, insbesondere zum manuell geführten Bewegen, durch manuelles Ausüben einer externen Kraft auf den Roboter nachgiebig, insbesondere gravitationskompensiert, geregelt, insbesondere positions- und/oder kraftgeregelt, insbesondere admittanz- oder impedanzgeregelt, beispielsweise wie in der eingangs genannten DE 10 2013 218 823 A1 oder WO 2014/043702 A1 beschrieben.

Zur kompakteren Darstellung werden vorliegend antiparallele Kräftepaare, d.h. Drehmomente, in fachüblicher Weise verallgemeinernd ebenfalls als Kräfte bezeichnet.

Unter Gelenkkräften werden vorliegend insbesondere in fachüblicher Weise Kräfte, insbesondere also Drehmomente, verstanden, die in einem Gelenk bzw. zwischen zwei durch das Gelenk verbundenen Gliedern des Roboters, insbesondere in einem bzw. auf einen Aktuator bzw. Antrieb des Gelenks, wirken. Beispielsweise prägt die Gewichtskraft eines horizontal gehaltenen Arms in dessen proximalen Drehgelenk eine entsprechende Gelenkkraft in Form eines Halte(dreh)moments auf bzw. ein, eine manuell auf diesen ausgeübte externe Kraft vertikal nach unten ein entsprechendes (zusätzliches) Drehmoment.

Die durch die externe Kraft aufgeprägten Gelenkkräfte, die bzw. deren Anteil zur Ermittlung des Eingabebefehls genutzt werden, können in einer Ausführung Gelenkkräfte in allen, insbesondere aktuierbaren bzw. aktuierten, Gelenken des Roboters oder auch (nur) Gelenkkräfte in einer (echten) Teilmenge dieser Gelenken umfassen, insbesondere sein. Unter dem Anteil der Gelenkkräfte, der eine Bewegung des Roboters (nur) in einem eingabebefehlspezifischen Unterraum des Gelenkkoordinatenraums des Roboters zu bewirken sucht, wird vorliegend insbesondere derjenige Anteil der Gelenkkräfte verstanden, der (nur) auf eine Bewegung des Roboters in diesem eingabebefehlspezifischen Unterraum hinwirkt. So sucht beispielsweise im Sinne der vorliegenden Erfindung der horizontale Anteil einer Kraft auf einen Klotz, der den Klotz auf einer horizontalen Ebene verschiebt, eine Bewegung des Klotzes in der horizontalen Ebene zu bewirken, während der vertikale Anteil der Kraft, der diesen Klotz gegen die Ebene presst, im Sinne der vorliegenden Erfindung eine vertikale Bewegung des Klotzes in Richtung auf die Ebene hin zu bewirken sucht.

Der Gelenkkoordinatenraum des Roboters ist in einer Ausführung in fachüblicher Weise der (mathematische) Raum, der durch die Gelenkkoordinaten des Roboters aufgespannt und durch die Gelenkkoordinatenbereiche begrenzt ist, bei einem siebenachsigen bzw. -gelenkigen Knickarm- bzw. Drehgelenkroboter beispielsweise der siebendimensionale Raum der Gelenkwinkel $q_1,...,q_7$.

In einer Ausführung umfasst ein zu ermittelnder Eingabebefehl einen Bewegungsbefehl zum Bewegen des Roboters in dem eingabebefehlspezifischen Unterraum, er kann insbesondere ein solcher Bewegungsbefehl sein, insbesondere ein Befehl einer translatorischen Verschiebung in einer vorgegebenen Richtung oder Ebene und/oder eine Drehung um eine oder mehrere vorgegebene Achsen. Somit kann in einer Ausführung der Roboter durch manuelles Ausüben einer externen Kraft auf den Roboter manuell geführt werden, insbesondere in Abhängigkeit von, insbesondere proportional zu, einem Betrag der externen Kraft, insbesondere des Anteils der externen Kraft in einer vorgegebenen Richtung oder Ebene und/oder um eine vorgegebene Achse bzw. in Abhängigkeit von, insbesondere proportional zu, einem Betrag des Anteils der durch diese externe Kraft aufgeprägten Gelenkkräfte in dem eingabebefehlspezifischen Unterraum.

Zusätzlich oder alternativ kann ein zu ermittelnder Eingabebefehl auch andere Aktionen des Roboters beeinflussen bzw. kommandieren, beispielsweise ein Aktivieren und/oder Deaktivieren eines robotergeführten Werkzeugs, ein Abspeichern einer Pose ("Touch-up") oder dergleichen.

In einer Ausführung wird der Eingabebefehl nur als umzusetzender Eingabebefehl ermittelt bzw. jedenfalls (nur) umgesetzt, sofern der Anteil der durch die externe Kraft aufgeprägten Gelenkkräfte in dem eingabebefehlspezifischen Unterraum einen vorgegebenen Schwellwert übersteigt. Hierdurch kann vorteilhaft insbesondere das Risiko einer unbeabsichtigten Fehleingabe reduziert werden. In einer Weiterbildung ist der Schwellwert vom Benutzer bzw. variabel vorgeb- bzw. einstellbar. Hierdurch kann dieser vorteilhaft an unterschiedliche Einsatzbedingungen angepasst werden.

In einer Ausführung können wahlweise zwei oder mehr unterschiedliche Eingabebefehle eingegeben werden, für die jeweils unterschiedliche eingabebefehlspezifische Unterräume des Gelenkkoordinatenraums vorgegeben sind bzw. werden, insbesondere Bewegungen in unterschiedlichen Unterräumen oder dergleichen. Insbesondere dann wird in einer Ausführung von zwei oder mehr (möglichen bzw. auswählbaren) Eingabebefehlen mit unterschiedlichen, für den jeweiligen Eingabebefehl spezifischen Unterräumen des Gelenkkoordinatenraums derjenige Eingabebefehl als eingegebener Eingabebefehl ermittelt, in dessen eingabebefehlspezifischem Unterraum die durch die externe Kraft aufgeprägten Gelenkkräfte den größeren, insbesondere den größten, Anteil aufweisen.

Dabei kann die Größe des Anteils in einer Ausführung durch eine Norm, insbesondere Betrags- oder Maximumnorm, ermittelt werden, insbesondere eine (Betrags- oder Maximum)Norm über den Anteil, insbesondere den mit dem Betrag der Gelenkkräfte skalierten Anteil oder über eine Differenz zwischen dem Anteil und dem Betrag der Gelenkkräfte.

Zur kompakteren Darstellung wird vorliegend auch kein bzw. ein Nicht-Befehl, insbesondere der Befehl keiner Bewegung bzw. eines Haltens einer Pose des Roboters, verallgemeinernd als einer von wenigstens zwei eingebbaren Eingabebefehlen verstanden, d.h. die Menge möglicher Eingabebefehle umfasst neben wenigstens einem aktiven Befehl, beispielsweise einer Bewegung in einem vorgegebenen Unterraum, auch das Element "kein Befehl", insbesondere "keine Bewegung". Somit kann insbesondere in einer Ausführung dann, wenn der Anteil der Gelenkkräfte in demjenigen Unterraum, der diesem Nicht-Befehl zugeordnet ist, am größten ist, erkannt werden, dass der Benutzer keinen Befehl eingeben will und etwaige externe Kräfte somit nicht der gewollten Befehlseingabe dienen und daher ignoriert werden.

Erfindungsgemäß ist ein eingabebefehlspezifischer Unterraum des Gelenkkoordinatenraums des Roboters ein bzw. der kinematische Nullraum des Roboters, in dem der Roboter ohne Veränderung seiner Endgliedposition bewegbar ist. Beispielsweise kann eine Endgliedposition durch sechs Koordinaten bestimmt sein und zwar drei Ortskoordinaten und drei Orientierungskoordinaten, die angeben in welcher Orientierung das Endglied im Raum positioniert ist. Ein Knickarmroboter mit sechs Gelenken weist eine eineindeutige Zuordnung zwischen den Gelenkstellungen und den sechs Koordinaten der Endgliedposition auf. Dagegen weist ein Knickarmroboter mit sieben Gelenken einen eindimensionalen kinematischen Nullraum auf. Dass dieser kinematische Nullraum eindimensional ist bedeutet, dass eine Funktion der Achsstellungen der sieben Gelenke von einem einzigen Parameter existiert, so dass dieser Parameter veränderbar ist und sich die Achsstellungen der Gelenke, bevorzugt aller sieben Gelenke, derart ändert, dass die sechs Koordinaten der Endgliedposition konstant bleiben, sich also das Endglied nicht im Raum bewegt.

Beispielsweise kann eine Endgliedposition auch lediglich durch die drei Ortskoordinaten bestimmt sein. Ein Knickarmroboter mit sechs Gelenken weist dann entsprechend einen dreidimensionalen kinematischen Nullraum auf, ein Knickarmroboter mit sieben Gelenken einen vierdimensionalen kinematischen Nullraum.

Der eingabebefehlspezifischer Unterraum kann dementsprechend ein Bewegungsraum des Roboter sein, der durch eine Anzahl von Parametern parametrisierbar ist, die kleiner ist als die Anzahl der Gelenke des Roboters. Insbesondere kann der eingabebefehlspezifischer Unterraum eines sechsachsigen Knickarmroboters ein, zwei, drei, vier oder fünf Dimensionen haben und durch ebensoviele Parameter parametrisierbar sein. Entsprechend kann der eingabebefehlspezifischer Unterraum eines siebensachsigen Knickarmroboters ein, zwei, drei, vier, fünf oder sechs Dimensionen haben und durch ebensoviele Parameter parametrisierbar sein. Bevorzugt kann die Variation eines oder mehrerer Parameter(s) des eingabebefehlspezifischen Unterraums zu einer Änderung der Achsstellungen mehrerer Gelenke, bevorzugt mehr Gelenke als geänderte Parameter, und insbesondere aller Gelenke führen. Beispielsweise kann die Änderung des einzigen Parameters eines eindimensionalen eingabebefehlspezifischen Unterraums zu einer Änderung der Achsstellungen von zwei, drei, vier, fünf, sechs, sieben oder mehr Gelenken, insbesondere aller Gelenke des Roboters, führen. Unter einem Gelenk können dabei neben rotatorischen Gelenken eines Knickarmroboters auch translatorische Gelenke verstanden werden, also Gelenke, die eine lineare Verlagerung ermöglichen, wie beispielsweise Linearachsen, auf denen insbesondere ein Knickarmroboter montiert sein kann.

Hierdurch kann vorteilhaft eine reine oder überwiegende manuell geführte Nullraumbewegung des Roboters vorteilhaft zur Befehlseingabe genutzt werden, beispielsweise die Ablage eines Ellbogens eines siebenachsigen Knickarmroboters wie des KUKA LBR iiwa.

Zusätzlich oder alternativ können in einer Ausführung ein oder mehrere eingabebefehlspezifische Unterräume des Gelenkkoordinatenraums des Roboters (jeweils) durch eine benutzer(vor)definiert eingeschränkte Bewegungsmöglichkeit des Roboters, insbesondere einer roboterfesten Referenz wie insbesondere des Tool Center Points (TCP), in einem Arbeitsraum möglicher Posen des Roboters, insbesondere in einem Arbeitsraum möglicher, insbesondere dreidimensionaler, Lagen bzw. Abständen zu einem Bezugssystem und/oder, insbesondere dreidimensionaler, Orientierungen bzw. Verdrehungen um, insbesondere drei, Achsen relativ zu einem Bezugssystem, insbesondere EULER- oder Kardanwinkel, der Referenz, vorgegeben sein bzw. werden.

In einer Ausführung sind ein oder mehrere eingeschränkte Bewegungsmöglichkeiten und/oder eingabebefehlspezifische Unterräume durch den Benutzer vorgebbar, insbesondere aus vorgegebenen Bewegungsmöglichkeiten bzw. Unterräumen auswählbar, insbesondere aus einer vorgegebenen Bibliothek.

Insbesondere kann in einer Ausführung die bzw. eine der benutzerdefiniert eingeschränkte(n) Bewegungsmöglichkeit(en) eine, insbesondere reine bzw. ausschließliche, Translation längs einer, insbesondere geraden, Kurve, insbesondere längs einer Koordinatenachse der Referenz, umfassen, insbesondere sein. Hierdurch kann der Roboter in einer Ausführung vorteilhaft präzise entlang der Kurve, insbesondere in Richtung der Koordinatenachse, handgeführt bewegt werden.

Zusätzlich oder alternativ kann in einer Ausführung die bzw. eine der benutzerdefiniert eingeschränkte(n) Bewegungsmöglichkeit(en) eine, insbesondere reine bzw. ausschließliche, Translation auf bzw. in einer, insbesondere ebenen, dreidimensionalen Fläche, insbesondere einer (durch zwei Koordinatenachsen aufgespannten) Koordinatenebene der Referenz, umfassen, insbesondere sein. Hierdurch kann der Roboter in einer Ausführung vorteilhaft präzise entlang der Fläche, insbesondere parallel zu einer Koordinaten(achsen)ebene, handgeführt bewegt werden.

Zusätzlich oder alternativ kann in einer Ausführung die bzw. eine der benutzerdefiniert eingeschränkte(n) Bewegungsmöglichkeit(en) eine, insbesondere reine bzw. ausschließliche, Rotation um eine, zwei oder drei, insbesondere zueinander senkrechte, Achsen, insbesondere Koordinatenachsen der Referenz umfassen, insbesondere sein. Hierdurch kann der Roboter in einer Ausführung vorteilhaft präzise um eine oder mehrere Drehachsen, insbesondere Koordinatenachsen, handgeführt verdreht werden.

Insbesondere kann in einer Ausführung die bzw. eine der benutzerdefiniert eingeschränkte(n) Bewegungsmöglichkeit(en) eine Translation längs einer Geraden, insbesondere einer Koordinatenachse der Referenz, sowie eine Rotation bzw. (Ver)Drehung um diese Gerade und/oder eine oder zwei, insbesondere hierzu und/oder zueinander senkrechte, Achsen, insbesondere eine oder zwei (weitere) Koordinatenachse der Referenz umfassen, insbesondere sein. Hierdurch kann in einer Ausführung vorteilhaft ein robotergeführtes Werkzeug, insbesondere ein (minimalinvasives) chirurgisches Instrument, vierdimensional durch einen kardanischen Punkt, insbesondere einen Trokarpunkt, geschoben und um diesen verdreht werden.

In einer Ausführung werden die durch die externe Kraft aufgeprägten Gelenkkräfte ermittelt. In einer Weiterbildung werden diese Gelenkkräfte modellgestützt bzw. basierend auf einem (mechanischen bzw. mathematischen Ersatz)Modell des Roboters und/oder auf Basis erfasster Kräfte in Gelenken des Roboters ermittelt, insbesondere auf Basis einer Differenz zwischen, insbesondere direkt, insbesondere durch Sensoren, oder indirekt, insbesondere auf Basis von Strömen, Spannungen, Leistungen der Antriebe oder dergleichen, erfassten aktuellen (Gesamt)Gelenkkräften und modellgestützt bzw. -basiert ermittelten bzw. abgeschätzten Gelenkkräften, insbesondere Gravitations-, Reibungs-, Trägheits- und/oder Prozesskräften. Bis auf Modellfehler entsprechen diese Differenzen dann den - im Modell nicht abgebildeten - Kräften, die durch die (manuell ausgeübte) externe Kraft auf den Roboter (zusätzlich) in den Gelenken aufgeprägt werden bzw. sind.

In einer Ausführung wird derjenige Anteil der durch die externe Kraft aufgeprägten Gelenkkräfte, der eine Bewegung des Roboters nur in einem vorgegebenen, für diesen Eingabebefehl spezifischen Unterraum des Gelenkkoordinatenraums des Roboters zu bewirken sucht bzw. bewirkt, auf Basis einer mathematischen Projektion der Gelenkkräfte in diesen Unterraum, insbesondere auf Basis einer Pseudoinversen, insbesondere der Moore-Penose-Pseudoinversen, ermittelt. Hierdurch können, insbesondere bei kinematisch redundanten Robotern, vorteilhaft die höherdimensionalen, insbesondere wenigstens siebendimensionalen, Gelenkkräfte vorteilhaft in einen geringerdimensionalen Unterraum projiziert werden. Allgemein weisen in einer Ausführung der bzw. die eingabebefehlspezifischen Unterräume jeweils eine geringere Dimension auf als der Gelenkwinkelraum, in einer Ausführung weisen ein oder mehrere der Unteräume auch eine geringere Dimension auf als sechs.

Wie vorstehend erläutert, können durch ein hier beschriebenes Verfahren vorteilhaft insbesondere Bewegungsbefehle zum handgeführten Bewegen des hierzu vorzugsweise nachgiebig geregelten Roboters eingegeben werden. Entsprechend wird nach einem Aspekt der vorliegenden Erfindung ein Bewegungsbefehl, der durch manuelles Ausüben einer externen Kraft auf den Roboter eingegeben wird, nach einem hier beschriebenen Verfahren automatisiert ermittelt und anschließend ausgeführt, insbesondere, indem auf Basis des Anteils der durch die externe Kraft aufgeprägten Gelenkkräfte, insbesondere proportional zu dessen Betrag und/oder Richtung, eine Sollbewegung, insbesondere Soll-Bewegungsrichtung, Soll-Bewegungsgeschwindigkeit und/oder anzufahrende Soll-Position, und/oder entsprechende Soll-Antriebskräfte des Roboters ermittelt und an die Antriebe bzw. Aktuatoren kommandiert werden.

Nach einem Aspekt der vorliegenden Erfindung ist eine Robotersteuerung hard- und/oder software- bzw. programmtechnisch zur Durchführung eines hier beschriebenen Verfahrens eingerichtet und/oder weist auf:

Mittel zum automatisierten Ermitteln eines bzw. des Eingabebefehls, insbesondere Bewegungsbefehls, für einen bzw. den Roboter, der durch manuelles Ausüben einer externen Kraft auf den Roboter eingegeben wird, auf Basis desjenigen Anteils von bzw. an durch die externe Kraft aufgeprägten Gelenkkräften, der bzw. welcher eine Bewegung des Roboters nur in einem für diesen Eingabebefehl spezifischen Unterraum des Gelenkkoordinatenraums des Roboters zu bewirken sucht bzw. bewirkt;

Mittel zum Vergleichen des Anteils mit einem vorgegebenen Schwellwert und Ermitteln des Eingabebefehls als umzusetzender Eingabebefehl nur, sofern der Anteil einen vorgegebenen Schwellwert übersteigt;

Mittel zum Vergleichen der Anteile der Gelenkkräfte in wenigstens zwei für verschiedene Eingabebefehle spezifischen Unterräumen des Gelenkkoordinatenraums und zum Ermitteln desjenigen Eingabebefehls als eingegebenen Eingabebefehl, in dessen eingabebefehlspezifischem Unterraum die Gelenkkräfte den größeren, insbesondere größten, Anteil aufweisen;

Mittel zum Vorgeben, insbesondere Auswählen, wenigstens eines eingabebefehlspezifischen Unterraums des Gelenkkoordinatenraums des Roboters durch Vorgeben, insbesondere Auswählen, einer benutzerdefiniert eingeschränkten Bewegungsmöglichkeit des Roboters, insbesondere einer roboterfesten Referenz, in einem Arbeitsraum möglicher Posen des Roboters, insbesondere in einem Arbeitsraum möglicher Lagen und/oder Orientierungen der Referenz;

Mittel zum Ermitteln der durch die externe Kraft aufgeprägten Gelenkkräfte, insbesondere modellgestützt und/oder auf Basis erfasster Kräfte in Gelenken des Roboters;

Mittel zum Ermitteln desjenigen Anteils der durch die externe Kraft aufgeprägten Gelenkkräfte, der eine Bewegung des Roboters nur in einem vorgegebenen, für diesen Eingabebefehl spezifischen Unterraum des Gelenkkoordinatenraums des Roboters zu bewirken sucht bzw. bewirkt, auf Basis einer mathematischen Projektion der Gelenkkräfte in den Unterraum, insbesondere auf Basis einer Pseudoinversen; und/oder

Mittel zum Ausführen des ermittelten Bewegungsbefehls, insbesondere durch Kommandieren bzw. Ansteuern der Antriebe bzw. Aktuatoren des Roboters.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Eingabebefehl ermitteln, insbesondere den Roboter entsprechend steuern, kann.

Nach einem Aspekt der vorliegenden Erfindung weist eine Roboteranordnung einen hier beschriebenen Roboter und eine hier beschriebene Robotersteuerung auf, die den Roboter insbesondere nach einem hier beschriebenen Verfahren steuert, insbesondere regelt, bzw. hierzu eingerichtet ist.

Weitere Vorteile und Merkmale ergeben sich aus den Unteransprüchen und den Ausführungsbeispielen. Hierzu zeigt, teilweise schematisiert:

Fig. 1:   eine Roboteranordnung mit einer Robotersteuerung nach einer Ausführung der vorliegenden Erfindung; und

Fig. 2:   ein Verfahren zum manuell geführten Bewegen des Roboters nach einer Ausführung der vorliegenden Erfindung.

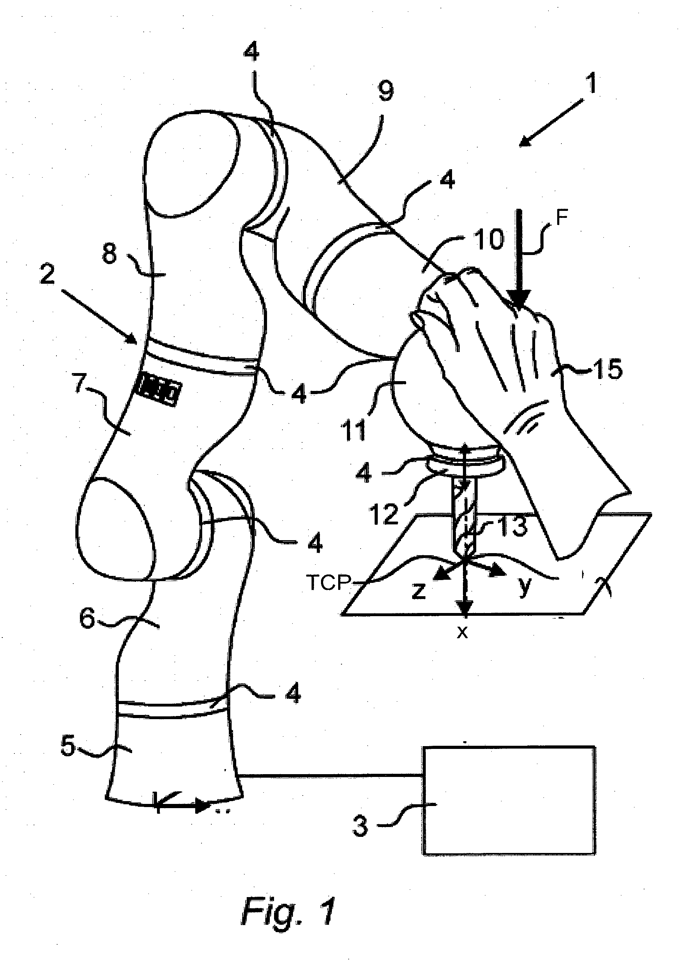

Fig. 1 zeigt eine Roboteranordnung 1 mit einem Roboter 2 und einer Robotersteuerung 3 nach einer Ausführung der vorliegenden Erfindung.

Der Roboter weist Glieder 5-12, insbesondere eine Basis 5 und ein Endglied in Form eines Werkzeugflansches 12, auf, die paarweise durch sieben aktuierte Drehgelenke 4 miteinander verbunden sind, er ist somit kinematisch redundant.

Der Roboter führt im Ausführungsbeispiel exemplarisch ein Werkzeug 13 und weist eine roboterfeste Referenz in Form seines TCPs mit den Referenz-Koordinatenachsen x (in Werkzeugachsen- bzw. -längs- bzw. -stoßrichtung) y, z (senkrecht zueinander und zur x-Achse) auf.

Der Roboter 2 wird durch die Steuerung 3 nachgiebig geregelt, beispielsweise impedanzgeregelt.

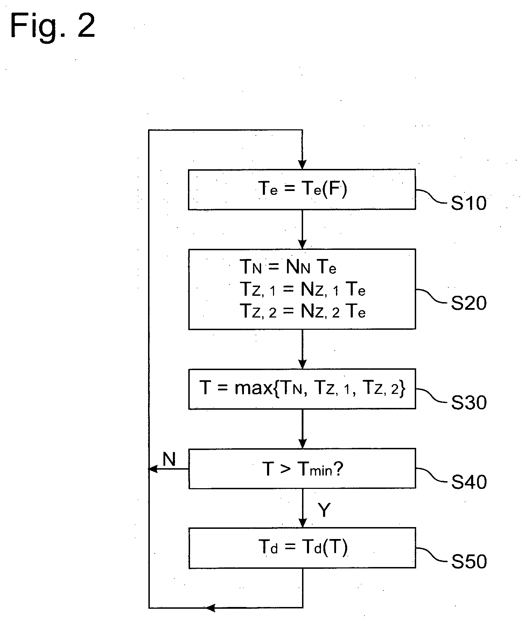

Die Steuerung 3 führt dabei ein nachfolgend mit Bezug auf Fig. 2 erläutertes Verfahren zum manuell geführten Bewegen des Roboters nach einer Ausführung der vorliegenden Erfindung durch bzw. ist hierzu durch ein entsprechendes Computerprogrammprodukt programmtechnisch eingerichtet.

In einem ersten Schritt S10 ermittelt die Steuerung 3 auf Basis von Kräften in Form von Drehmomenten in den Gelenken 4 des Roboters 2, die beispielsweise durch Drehmomentsensoren oder auf Basis von Motorströmen erfasst werden, und eines Modells des Roboters, das die durch seine Masse, Trägheit und Reibung in den Gelenken 4 auftretenden Drehmomente modelliert, die Gelenkkräfte $T_e$, die durch manuelles Ausüben einer externen Kraft F auf den Roboter durch einen Benutzer 15 aufgeprägt werden: $T_e = T_e(F)$. Hierzu subtrahiert die Steuerung beispielsweise von den erfassten Gelenkkräften die auf Basis des Modells ermittelten Gelenkkräfte. Gleichermaßen könnte die Kraft F beispielsweise auch durch einen sechsachsigen Kraft(-Momenten-)Sensor gemessen und auf Basis der Gelenkwinkel $q_1,...,q_7$ durch die Jacobimatrix J in den Gelenkkoordinatenraum projiziert werden.

In einem zweiten Schritt S20 ermittelt die Steuerung denjenigen Anteil $T_N$ der durch die externe Kraft aufgeprägten Gelenkkräfte $T_e$, der eine Bewegung des Roboters 2 nur in seinem kinematischen Nullraum, d.h. ohne Veränderung der Lage und Orientierung seines Endglieds 12, zu bewirken sucht bzw. bewirkt.

Hierzu ermittelt die Steuerung 3 die transponierte Jacobimatrix

$$J^T = \begin{bmatrix} \dfrac{\partial X}{\partial q_1} & \cdots & \dfrac{\partial X}{\partial q_7} \\ \dfrac{\partial Y}{\partial q_1} & \cdots & \dfrac{\partial Y}{\partial q_7} \\ \dfrac{\partial Z}{\partial q_1} & \cdots & \dfrac{\partial Z}{\partial q_7} \\ \dfrac{\partial \alpha}{\partial q_1} & \cdots & \dfrac{\partial \alpha}{\partial q_7} \\ \dfrac{\partial \beta}{\partial q_1} & \cdots & \dfrac{\partial \beta}{\partial q_7} \\ \dfrac{\partial \gamma}{\partial q_1} & \cdots & \dfrac{\partial \gamma}{\partial q_7} \end{bmatrix}^T$$

mit der Lage (X, Y, Z) und Orientierung ($\alpha$, $\beta$, $\gamma$) des TCPs und den Gelenkwinkel $q_1,...,q_7$ der sieben Gelenke 4, die transponierte Moore-Penrose-Pseudoinverse $J^{+T}$, hieraus die Projektion $N_N = 1 - J^T \cdot J^{+T}$ in diesen Unterraum des Gelenkkoordinatenraums mit der Einheitsmatrix 1, und daraus den Anteil $T_N = N_N \cdot T_e$.

Darüber hinaus ermittelt die Steuerung im zweiten Schritt S20 denjenigen Anteil $T_{Z,1}$ der Gelenkkräfte $T_e$, der eine Bewegung des Roboters 2 nur in einem ersten weiteren Unterraum des Gelenkkoordinatenraums des Roboters zu bewirken sucht bzw. bewirkt, der durch eine eingeschränkte Bewegungsmöglichkeit des TCPs längs der x-Koordinatenachse des TCPs vorgegeben ist.

Hierzu ermittelt die Steuerung 3 die entsprechend reduzierte transponierte Jacobimatrix

$$J_{Z,1}^T = \begin{bmatrix} \dfrac{\partial Y}{\partial q_1} & \cdots & \dfrac{\partial Y}{\partial q_7} \\ \dfrac{\partial Z}{\partial q_1} & \cdots & \dfrac{\partial Z}{\partial q_7} \\ \dfrac{\partial \alpha}{\partial q_1} & \cdots & \dfrac{\partial \alpha}{\partial q_7} \\ \dfrac{\partial \beta}{\partial q_1} & \cdots & \dfrac{\partial \beta}{\partial q_7} \\ \dfrac{\partial \gamma}{\partial q_1} & \cdots & \dfrac{\partial \gamma}{\partial q_7} \end{bmatrix}^T,$$

hieraus mit der entsprechenden transponierten Moore-Penrose-Pseudoinverse $J_{Z,1}^{+T}$ die Projektion $N_{Z,1} = [1 - J_{Z,1}^T \cdot J_{Z,1}^{+T}] \cdot J^T \cdot J^{+T}$ in diesen ersten weiteren Unterraum des Gelenkkoordinatenraums, und daraus den Anteil $T_{Z,1} = N_{Z,1} \cdot T_e$.

Darüber hinaus ermittelt die Steuerung im zweiten Schritt S20 auch noch denjenigen Anteil $T_{Z,2}$ der Gelenkkräfte $T_e$, der eine Bewegung des Roboters 2 nur in einem zweiten weiteren Unterraum des Gelenkkoordinatenraums des Roboters zu bewirken sucht bzw. bewirkt, der durch eine eingeschränkte Bewegungsmöglichkeit des TCPs in bzw. auf der y-z-Koordinateneben des TCPs vorgegeben ist.

Hierzu ermittelt die Steuerung 3 die entsprechend reduzierte transponierte Jacobimatrix

$$J_{Z,2}^{T} = \begin{bmatrix} \dfrac{\partial X}{\partial q_1} & \cdots & \dfrac{\partial X}{\partial q_7} \\ \dfrac{\partial \alpha}{\partial q_1} & \cdots & \dfrac{\partial \alpha}{\partial q_7} \\ \dfrac{\partial \beta}{\partial q_1} & \cdots & \dfrac{\partial \beta}{\partial q_7} \\ \dfrac{\partial \gamma}{\partial q_1} & \cdots & \dfrac{\partial \gamma}{\partial q_7} \end{bmatrix}^{T} ,$$

hieraus mit der entsprechenden transponierten Moore-Penrose-Pseudoinverse $J_{Z,2}^{+T}$ die Projektion $N_{Z,2} = [1 - J_{Z,2}^{T} \cdot J_{Z,2}^{+T}] \cdot J^{T} \cdot J^{+T}$ in diesen zweiten weiteren Unterraum des Gelenkkoordinatenraums, und daraus den Anteil $T_{Z,2} = N_{Z,2} \cdot T_e$.

Nun ermittelt die Steuerung 3 in einem Schritt S30 den größten Anteil T dieser Anteile $T_N$, $T_{Z,1}$ und $T_{Z,2}$: $T = \max\{T_N, T_{Z,1}, T_{Z,2}\}$, wobei als Größe eines Anteils $T_u$ beispielsweise die Betragsnorm $\| T_N \|^2$ verwendet werden kann.

Ist beispielsweise der erste weitere Anteil $T_{Z,1}$ am größten, bedeutet dies, dass der Benutzer 15 sozusagen am stärksten in Richtung der x-Achse des TCPs drückt. Daraus kann die Steuerung 3 erkennen, dass eine handgeführte Bewegung nur in diesem Unterraum des Gelenkwinkelraums gewünscht ist.

Ist andererseits der zweite weitere Anteil $T_{Z,2}$ am größten, bedeutet dies, dass der Benutzer 15 sozusagen am stärksten in Richtung der y-z-Ebene des TCPs drückt. Daraus kann die Steuerung 3 erkennen, dass eine handgeführte Bewegung nur in diesem Unterraum des Gelenkwinkelraums gewünscht ist.

Ist entsprechend der Anteil $T_N$ am größten, bedeutet dies, dass die durch den Benutzer 15 aufgebrachte Kraft F sozusagen am stärksten im kinematischen Nullraum des Roboters 2 wirkt, beispielsweise bei festgehaltenem TCP den Ellbogen umpositioniert. Daraus kann die Steuerung 3 erkennen, dass eine handgeführte Bewegung nur im kinematischen Nullraum des Roboters 2 gewünscht ist.

In analoger Weise können weitere Unterräume geprüft werden.

Zusätzlich oder alternativ ist es auch möglich, beispielsweise den Anteil $T_N$ im kinematischen Nullraum des Roboters 2 mit den Gelenkkräften selber zu vergleichen und auf dieser Basis zu entscheiden, ob eine handgeführte Bewegung im kinematischen Nullraum oder eine handgeführte Bewegung des TCPs eingegeben wird.

So kann beispielsweise eine handgeführte Bewegung im kinematischen Nullraum erkannt werden, falls eine Bewertungsgröße $H = \| T_N \| / \| T_e \|$ einen vorgegebenen Grenzwert übersteigt.

Man erkennt, dass die reduzierten Jacobimatrizen sich vorteilhaft jeweils durch Streichung der entsprechenden eingeschränkten Bewegungsmöglichkeit(en) des TCPs ergeben. In einer Abwandlung kann alternativ die reduzierte Jacobimatrix auch nur die entsprechende eingeschränkte Bewegungsmöglichkeit des TCPs beschreiben, beispielsweise also

$$J_{Z,1}^{T} = \begin{bmatrix} \dfrac{\partial X}{\partial q_1} & \cdots & \dfrac{\partial X}{\partial q_7} \end{bmatrix}^{T}$$

mit entsprechend angepasster Projektion.

Dann vergleicht in einem Schritt S40 die Steuerung den so gefundenen Anteil T mit einem vorgebbaren Schwellwert $T_{min}$. Ist der Anteil T größer als dieser (S40: "Y"), wird der Eingabebefehl in einem Schritt S50 umgesetzt, indem Soll-Momente $T_d$ der Antriebe der Gelenke 4 des Roboters 2 auf Basis des Anteils T bestimmt werden, beispielsweise proportional zu diesem Anteil T. Anschließend kehrt das Verfahren zu Schritt S10 zurück.

Bleibt auch der größte Anteil T unter dem Schwellwert $T_{min}$ (S40: "N"), wird eine Befehlseingabe durch die manuell aufgebrachte externe Kraft F verworfen und das Verfahren kehrt direkt zu Schritt S10 zurück.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

Bezugszeichenliste

| | |
|---|---|
| 1 | Roboteranordnung |
| 2 | Roboter |
| 3 | Robotersteuerung |
| 4 | (Dreh)Gelenk |
| 5 | Basis |
| 6-11 | Roboterglied |
| 12 | Werkzeugflansch (Endglied) |
| 13 | Werkzeug |
| 15 | Benutzer |
| F | externe Kraft |
| $T_d$ | Soll-Moment (Eingabebefehl) |
| $T_e$ | durch die externe Kraft aufgeprägte Gelenkkräfte |
| $T_{min}$ | Schwellwert |
| $T_N$; $T_{Z, 1}$; $T_{Z, 2}$; | Anteile in einem Unterraum |
| TCP | Tool Center Point |

**Patentansprüche**

1. Verfahren zum automatisierten Ermitteln eines Eingabebefehls ($T_d$) für einen Roboter (1), der durch manuelles Ausüben einer externen Kraft (F) auf den Roboter eingegeben wird, wobei der Eingabebefehl auf Basis desjenigen Anteils von durch die externe Kraft (F) aufgeprägten Gelenkkräften ($T_e$) ermittelt wird, der eine Bewegung des Roboters nur in einem für diesen Eingabebefehl spezifischen Unterraum des Gelenkkoordinatenraums des Roboters zu bewirken sucht,
   wobei ein eingabebefehlspezifischer Unterraum des Gelenkkoordinatenraums des Roboters ein kinematischer Nullraum des Roboters ist, in dem der Roboter ohne Veränderung seiner Endgliedposition bewegbar ist, wobei

   a) von wenigstens zwei möglichen Eingabebefehlen mit unterschiedlichen, für den jeweiligen Eingabebefehl spezifischen Unterräumen des Gelenkkoordinatenraums derjenige Eingabebefehl als eingegebener Eingabebefehl ermittelt wird, in dessen eingabebefehlspezifischem Unterraum die durch die externe Kraft (F) aufgeprägten Gelenkkräfte ($T_e$) den größeren Anteil aufweisen; und/oder
   b) der Anteil im kinematischen Nullraum des Roboters mit den durch die externe Kraft aufgeprägten Gelenkkräften selber verglichen und auf dieser Basis entschieden wird, ob eine handgeführte Bewegung im kinematischen Nullraum oder eine handgeführte Bewegung einer roboterfesten Referenz eingegeben wird.

2. Verfahren nach Anspruch 1, wobei der Eingabebefehl einen Bewegungsbefehl ($T_d$) zum Bewegen des Roboters in dem eingabebefehlspezifischen Unterraum umfasst.

3. Verfahren nach einem der vorhergehenden Ansprüche, wobei der Eingabebefehl nur als umzusetzender Eingabebefehl ermittelt wird, sofern der Anteil der durch die externe Kraft (F) aufgeprägten Gelenkkräften ($T_e$) einen vorgegebenen Schwellwert ($T_{min}$) übersteigt.

4. Verfahren nach einem der vorhergehenden Ansprüche, wobei wenigstens ein eingabebefehlspezifischer Unterraum des Gelenkkoordinatenraums des Roboters durch eine benutzerdefiniert eingeschränkte Bewegungsmöglichkeit des Roboters, insbesondere einer roboterfesten Referenz (TCP), in einem Arbeitsraum möglicher Posen des Roboters, insbesondere in einem Arbeitsraum möglicher Lagen und/oder Orientierungen der Referenz, vorgegeben ist.

5. Verfahren nach dem vorhergehenden Anspruch, wobei die benutzerdefiniert eingeschränkte Bewegungsmöglichkeit wenigstens eines eingabebefehlspezifischen Unterraums des Roboters eine Translation längs einer, insbesondere geraden, Kurve, insbesondere längs einer Koordinatenachse (x) der Referenz, eine Translation auf einer, insbesondere ebenen, Fläche, insbesondere einer Koordinatenebene (y, z) der Referenz, und/oder eine Rotation um eine, zwei oder drei Achsen, insbesondere Koordinatenachsen (x, y, z) der Referenz umfasst.

6. Verfahren nach einem der vorhergehenden Ansprüche, wobei die durch die externe Kraft aufgeprägten Gelenkkräfte modellgestützt und/oder auf Basis erfasster Kräfte in Gelenken (4) des Roboters ermittelt werden.

7. Verfahren nach einem der vorhergehenden Ansprüche, wobei derjenige Anteil der durch die externe Kraft aufgeprägten Gelenkkräfte, der eine Bewegung des Roboters nur in einem vorgegebenen, für diesen Eingabebefehl spezifischen Unterraum des Gelenkkoordinatenraums des Roboters zu bewirken sucht, auf Basis einer mathematischen Projektion ($N_N$, $N_{Z,1}$, $N_{Z,2}$) der Gelenkkräfte in den Unterraum, insbesondere auf Basis einer Pseudoinversen, ermittelt wird.

8. Verfahren nach einem der vorhergehenden Ansprüche, wobei der Roboter wenigstens sieben Gelenke (4) aufweist.

9. Verfahren zum manuell geführten Bewegen eines Roboters (2), wobei ein durch manuelles Ausüben einer externen Kraft (F) auf den Roboter eingegebener Bewegungsbefehl ($T_d$) nach einem Verfahren nach einem der vorhergehenden Ansprüche automatisiert ermittelt und anschließend ausgeführt wird.

10. Robotersteuerung (3), die zur Durchführung eines Verfahrens nach einem der vorhergehenden Ansprüche eingerichtet ist.

11. Roboteranordnung (1), die einen Roboter (2), insbesondere mit wenigstens sieben Gelenken (4), und eine Robotersteuerung (3) nach dem vorhergehenden Anspruch aufweist.

12. Computerprogrammprodukt mit einem Programmcode, der auf einem von einem Computer lesbaren Medium gespeichert ist, zur Durchführung eines Verfahrens nach einem der Ansprüche 1 bis 9 mithilfe der Roboteranordnung nach dem vorhergehenden Anspruch.

**Claims**

1. A method of automatically determining an input command ($T_d$) for a robot (1), which input command ($T_d$) is input by manually exerting an external force (F) on the robot, wherein the input command is determined on the basis of that component of joint forces ($T_e$) which are applied by means of the external force (F) which seeks to cause a movement of the robot only in a subspace of the joint coordinate space of the robot which is specific to that input command,
   wherein an input command specific subspace of the joint coordinate space of the robot is a kinematic null space of the robot in which the robot is movable without changing the position of its end member, wherein:

   a) that input command of at least two possible input commands with different subspaces of the joint coordinate space specific to the respective input command is determined as the inputted input command in whose input command-specific subspace the joint forces ($T_e$) applied by means of the external force (F) have the greater proportion; and / or
   b) the component in the kinematic null space of the robot is compared with the joint forces themselves which have been applied by means of the external force, and on this basis a decision is taken as to whether a hand-guided movement in the kinematic null space or a hand-guided movement of a reference which is fixed with respect to the robot is being input.

2. The method according to claim 1, wherein the input command comprises a move command ($T_d$) for moving the robot in the input command-specific subspace.

3. The method according to any one of the preceding claims, wherein, only if the proportion of the joint forces ($T_e$) which have been applied by means of the external force (F) exceeds a predetermined threshold value ($T_{min}$), will the input command be determined as an input command to be implemented.

4. The method according to any one of the preceding claims, wherein at least one input command-specific subspace of the joint coordinate space of the robot is specified by means of a possibility of movement of the robot which has been restricted in a user-defined manner, in particular a possibility of movement of a reference fixed with respect to the robot (TCP), in a working space of possible poses of the robot, in particular in a working space of possible positions and / or orientations of the reference.

5. The method according to the preceding claim, wherein the possibility of movement which has been restricted in a user-defined manner, of at least one input command-specific subspace of the robot, comprises a translational movement along a curve, in particular along a straight curve, in particular along a coordinate axis (x) of the reference, a translational movement on a surface, in particular on a flat surface, in particular on a coordinate plane (y, z) of the reference, and / or a rotational movement about one, two or three axes, in particular about one, two or three coordinate axes (x, y, z) of the reference.

6. The method according to any one of the preceding claims, wherein the joint forces which are applied by means of the external force are determined with the aid of a model and / or on the basis of forces which are detected in joints (4) of the robot.

7. The method according to any one of the preceding claims, wherein that component, of the joint forces which are applied by means of the external force, which seeks to cause a movement of the robot only in a specified subspace of the joint coordinate space of the robot which is specific to this input command is determined on the basis of a mathematical projection ($N_N$, $N_{Z, 1}$, $N_{Z, 2}$) of the joint forces into the subspace, in particular on the basis of a pseudoinverse of the joint forces.

8. The method according to any one of the preceding claims, wherein the robot comprises at least seven joints (4).

9. A method of moving a robot (2) in a manually guided manner, wherein a movement command ($T_d$) which is being input by manually exerting an external force (F) on the robot is determined in an automated manner in accordance with a method according to any one of the preceding claims and is subsequently executed.

10. A robot controller (3) which is adapted to carry out a method in accordance with any one of the preceding claims.

11. A robot arrangement (1) which comprises a robot (2), in particular a robot (2) with at least seven joints (4), and a robot controller (3) in accordance with the preceding claim.

12. A computer program product comprising a program code which is stored on a computer readable medium, for carrying out a method in accordance with any one of claims 1 to 9 with the aid of the robot arrangement according to the preceding claim.

**Revendications**

1. Procédé de détermination automatisée d'une instruction d'entrée ($T_d$) pour un robot (1) qui est entrée par exercice manuel d'une force externe (F) sur le robot, dans lequel l'instruction d'entrée est déterminée sur la base de la part des forces d'articulation ($T_e$) imprimées par la force externe (F) qui cherche à provoquer un mouvement du robot seulement dans un sous-espace spécifique à cette instruction d'entrée de l'espace de coordonnées articulaires du robot, dans lequel un sous-espace spécifique à l'instruction d'entrée de l'espace de coordonnées articulaires du robot est un espace nul cinématique du robot, dans lequel le robot est mobile sans modification de sa position d'organe terminal, dans lequel

a) parmi au moins deux instructions d'entrée possibles avec différents sous-espaces spécifiques pour l'instruction d'entrée respective de l'espace de coordonnées articulaires, l'instruction d'entrée est déterminée comme instruction d'entrée entrée, dans le sous-espace spécifique à l'instruction d'entrée duquel les forces d'articulation ($T_e$) imprimées par la force externe (F) présentent la plus grande part ; et/ou
b) la part dans l'espace nul cinématique du robot est comparée avec les forces d'articulation elles-mêmes imprimées par la force externe et il est décidé sur cette base si un mouvement à la main dans l'espace nul cinématique ou un mouvement à la main d'une référence fixe au robot est entré.

2. Procédé selon la revendication 1, dans lequel l'instruction d'entrée comporte un ordre de mouvement ($T_d$) pour le mouvement du robot dans le sous-espace spécifique à l'instruction d'entrée.

3. Procédé selon l'une quelconque des revendications précédentes, dans lequel l'instruction d'entrée est déterminée seulement comme instruction d'entrée à appliquer dans la mesure où la part des forces d'articulation ($T_e$) imprimées par la force externe (F) dépasse une valeur seuil ($T_{min}$) prédéfinie.

4. Procédé selon l'une quelconque des revendications précédentes, dans lequel au moins un sous-espace spécifique à l'instruction d'entrée de l'espace de coordonnées articulaires du robot est prédéfini par une possibilité de mouvement limitée de manière définie par l'utilisateur du robot, en particulier une référence fixe au robot (TCP), dans un espace de travail de possibles poses du robot, en particulier dans un espace de travail de possibles positions et/ou orientations de la référence.

5. Procédé selon la revendication précédente, dans lequel la possibilité de mouvement limitée de manière définie par l'utilisateur au moins d'un sous-espace spécifique à l'instruction d'entrée du robot comporte une translation le long d'une courbe, en particulier droite, en particulier le long d'un axe de coordonnées (x) de la référence, une translation sur une surface, en particulier plane, en particulier d'un plan de coordonnées (y, z) de la référence, et/ou une rotation autour d'un, deux ou trois axes, en particulier axes de coordonnées (x, y, z) de la référence.

6. Procédé selon l'une quelconque des revendications précédentes, dans lequel les forces d'articulation imprimées par la force externe sont assistées par modélisation et/ou sur la base de forces détectées dans des articulations (4) du robot.

7. Procédé selon l'une quelconque des revendications précédentes, dans lequel la part des forces d'articulation imprimées par la force externe qui cherche à provoquer un mouvement du robot seulement dans un sous-espace prédéfini, spécifique pour cette instruction d'entrée, de l'espace de coordonnées articulaires du robot, est déterminée sur la base d'une projection mathématique ($N_N$, $N_{Z,1}$, $N_{z,2}$) des forces articulaires dans le sous-espace, en particulier sur la base d'une pseudoinverse.

8. Procédé selon l'une quelconque des revendications précédentes, dans lequel le robot présente au moins sept articulations (4).

9. Procédé de déplacement guidé manuellement d'un robot (2), dans lequel une instruction de déplacement ($T_d$) entrée par l'exercice manuel d'une force externe (F) sur le robot est déterminée de manière automatisée selon un procédé selon l'une quelconque des revendications précédentes et est ensuite réalisée.

10. Commande de robot (3) qui est conçue pour la réalisation d'un procédé selon l'une quelconque des revendications précédentes.

11. Agencement de robot (1) qui présente un robot (2), en particulier avec au moins sept articulations (4), et une commande de robot (3) selon la revendication précédente.

12. Produit de programme informatique avec un code de programme qui est enregistré sur un support lisible par un ordinateur, pour la réalisation d'un procédé selon l'une quelconque des revendications 1 à 9 à l'aide de l'agencement de robot selon la revendication précédente.

*Fig. 1*

# Fig. 2

$$T_e = T_e(F) \quad \text{—S10}$$

$$T_N = N_N\, T_e$$
$$T_{z,1} = N_{z,1}\, T_e$$
$$T_{z,2} = N_{z,2}\, T_e \quad \text{—S20}$$

$$T = \max\{T_N, T_{z,1}, T_{z,2}\} \quad \text{—S30}$$

$$T > T_{min}? \quad \text{—S40}$$

N

Y

$$T_d = T_d(T) \quad \text{—S50}$$

**EP 3 323 026 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013218823 A1
- WO 2014043702 A1
- EP 2131257 A1
- US 2011190932 A1